# EUROPÄISCHE PATENTSCHRIFT

(11) **EP 1 239 122 B1**
(45) Veröffentlichungstag und Bekanntmachung des Hinweises auf die Patenterteilung: **16.06.2004**
(21) Anmeldenummer: 02450035.7
(22) Anmeldetag: 22.02.2002
(51) Int. Cl.: F01L 1/047, F16H 53/02, B21D 26/02, B21D 53/84

(54) **Hohlwelle mit verschleissfesten Teilbereichen und Verfahren zu dessen Herstellung**
Hollow shaft with wear resistant parts and method for producing such a shaft
Arbre creux avec des parties resistants à l'érosion et methode pour produire celui-ci

(30) Priorität: 28.02.2001 AT 3202001
(43) Veröffentlichungstag der Anmeldung: 11.09.2002
(73) Patentinhaber: BÖHLERIT G.m.b.H. & Co. KG, A-8605 Kapfenberg (AT)
(72) Erfinder: Cantz, Rudolf Dipl.Ing., 8653 Stanz i.M. (AT); Voigt, Klaus Dr., 8605 Parschlug (AT)
(74) Vertreter: Jellinek, Gerhard (AT)

(56) Entgegenhaltungen:
- DE-C- 19 740 322
- US-A- 5 850 695
- PATENT ABSTRACTS OF JAPAN vol. 1999, no. 09, 30. Juli 1999 (1999-07-30) -& JP 11 107711 A (TUBE FOMING CO LTD;NISSAN MOTOR CO LTD), 20. April 1999 (1999-04-20)
- PATENT ABSTRACTS OF JAPAN vol. 1999, no. 14, 22. Dezember 1999 (1999-12-22) -& JP 11 241605 A (TUBE FOMING CO LTD;NISSAN MOTOR CO LTD), 7. September 1999 (1999-09-07)
- PATENT ABSTRACTS OF JAPAN vol. 007, no. 063 (M-200), 16. März 1983 (1983-03-16) -& JP 57 206530 A (AKIHIKO NAKAMURA), 17. Dezember 1982 (1982-12-17)

## Beschreibung

Die Erfindung bezieht sich auf einen Wellenkörper mit zumindest in Teilbereichen über die Längserstreckung, bezogen auf die Axe, asymmetrischer Querschnittsform, insbesondere Nocken- oder Kurbelwellen, mit in den Arbeits- oder Lagerbereichen erhöhten Verschleißwiderstand aufweisenden Oberflächenschichten.
Weiters umfaßt die Erfindung ein Verfahren zur Herstellung von Wellenkörpern mit obigen Merkmalen.

Wellenkörper, die in Teilbereichen über die Längserstreckung, bezogen auf die Axe, asymmetrische Querschnittsform aufweisen, dienen im Maschinenbau als Antriebsmittel für Steuer- oder Arbeitsorgane, mittels welchen eine Drehbewegung in eine Longitudinalbewegung oder umgekehrt genau umgesetzt wird. Dazu ist der Wellenkörper drehbar gelagert und an den asymmetrischen Bereichen erfolgt ein Abgriff von Steuer- und Arbeitsteilen. Weil nun in den meisten Fällen hohe Präzision der Bewegungen und der diese ausführenden Teile erforderlich ist, sind oft beste Lagerbedingungen und hohe Anpreßdrücke der Abgriffteile vorgesehen. Im Hinblick auf eine hohe Betriebssicherheit und auf einen langen Präzisionslauf müssen die Lager- und Arbeitsflächen eine hohe Verschleißfestigkeit aufweisen.

Im Automobilmotorenbau sind beispielsweise sogenannte Nockenwellen, weiche die Ventilbewegung steuern, derartige Wellenkörper.

Es ist bekannt, Wellenkörper für Nockenwellen zu gießen, nachfolgend, wie gefordert, spanabhebend auf Maß zu bearbeiten und gegebenenfalls die Oberfläche der Lager- und Nockenbereiche zu härten. Das Härten kann dabei mittels thermischer Behandlung der Oberflächenschicht und/oder durch Nitrieren oder Carbonitrieren derselben erfolgen, allerdings sind derartig hergestellte Nockenwellen kaum für Hochleistungsaggregate einsetzbar.

Weiters sind geschmiedete, insbesondere aus legiertem Stahl geschmiedete, Nockenwellen bekannt, welche Wellen in den Lager- und Arbeitsbereichen harte und verschleißfeste Oberflächenschichten besitzen, die durch wärmetechnische Behandlung und/oder durch Auflegieren mit Stickstoff gebildet sind. Diese gebildeten Nockenwellen können den mechanischen Beanspruchungen im vorgesehenen Maße standhalten, sind jedoch teuer, aufwendig herzustellen und schwer.

Aus JP 11107711 ist eine hohle Nockenwelle bekannt, welche aus einem Rohr, beispielsweise aus einer Eisenbasislegierung als Grundwerkstoff, durch plastisches Umformen erstellt ist. Nach der Umformung wird die so erstellte Nockenwelle in Arbeits- und Lagerbereichen lasergehärtet, so dass die Nockenwelle in diesen Bereichen im Vergleich mit den nicht gehärteten Bereichen der Nockenwelle verschleißfester sein soll.

Gemäß JP 11241605 ist ferner auch schon bekannt geworden, Bereiche von Nockenwellen durch Aufbringen von aushärtbaren Eisenlegierungen verschleißfester zu gestalten. Die dadurch erzielbaren Härten von auf Verschleiß beanspruchten Oberflächenschichten sind jedoch durch das Aushärtevermögen von Eisenlegierungen begrenzt.

Die Erfindung setzt sich nun zum Ziel, Wellenkörper der eingangs genannten Art zu schaffen, welche herstellungstechnisch einfacher und wirtschaftlicher gefertigt sind, in den Arbeits- und Lagerbereichen einen höheren Verschleißwiderstand aufweisen und insbesondere geringes Gewicht besitzen.

Weiters ist es Aufgabe der Erfindung, ein Verfahren anzugeben, mit welchem auf einfache und wirtschaftliche Weise Wellenkörper herstellbar sind, die ein geringes Gewicht und verbesserte Gebrauchseigenschaften, insbesondere hinsichtlich des Verschleißes der Lager- und Arbeitsbereiche. besitzen.

Dieses Ziel wird durch einen Wellenkörper gemäß Anspruch 1 erreicht.

Die mit der Erfindung erzielten Vorteile sind im wesentlichen darin zu sehen, daß ein aus einem kostengünstig bereitstellbaren, einfachen Vormaterial gefertigter hochspezialisierter Teil gerade nur in den erforderlichen Bereichen eine wesentlich, durch eingeschmolzene Hartstoffpartikel und den Matrixaufbau verbesserte Verschleißfestigkeit besitzt und als Teil ein bedeutend geringeres Gewicht als Vollteile aufweist. Gerade an den mechanisch hochbeanspruchten Stellen des Wellenkörpers liegt auf Grund der Tiefziehverformung eine vorteilhafte Materialverfestigung vor. Die Verschleißschicht ist mit dem Wellenkörper metallisch verbunden, was einerseits ein Abblättern oder dergleichen Lösen der Schicht verhindert, andererseits einen günstigen stabilisierenden Spannungszustand schafft. Mit anderen Worten: Ein einfach herstellbarer, leichter Präzisionswellenkörper ist lediglich in den Oberflächenbereichen mit hoher Verschleißbeanspruchung unter Bildung einer Verschleißschicht mit Metall(en) und Verbindungen legiert.

Wenn, wie vorteilhaft vorgesehen sein kann, die Verschleißschicht eine Dicke von 0,2 bis 5,0 mm besitzt und aus eingeschmolzenen Zusatzwerkstoffen besteht, wobei zwischen Grundwerkstoff des Wellenkörpers und der Verschleißschicht eine Mischzone mit geringerer Schichtdicke ausgebildet ist und derartig der Verschleißschicht- Außenbereich Homogenität aufweist, sind beste Gebrauchseigenschaften der Arbeits- und Lagerbereiche erstellbar. Dabei kann die gewünschte Zusammensetzung der Verschleißschicht in dem oberflächennahen Bereich weitgehend ohne Aufmischung durch den Grundwerkstoff gewünscht eingestellt werden, auch wird beim Schleifen auf ein gewünschtes Maß ein gleichmäßiger Abtrag erzielt.

Mit Vorteil wird die Ausbildung des Wellenkörpers so getroffen, daß die Zusatzwerkstoffe Metalle, Carbide, Carbonitride, Boride, Carboboride, Nitride und Oxide, vorzugsweise Verbindungen der Metalle der Gruppen 4,5,6,8,9,10, 13 und 14 des Periodensystems der Elemente, einzeln oder in Mischform, sind.

Hinsichtlich der Verschleißschichtgüte und deren gewünschten Eigenschaften und somit höchster Genauigkeit der Flächen wegen, kann es günstig sein, wenn die Verschleißschicht mit Hartmetall als Zusatzwerkstoff gebildet ist.

Wenn in günstiger Weise die Verschleißschicht außenseitig eine Härte von mindestens 550 HV, vorzugsweise bis 900 HV und höher besitzt, ist auch bei gegebenenfalls trockener Reibung ein Verschleiß weitgehend gering.

Die weitere Aufgabe, ein Verfahren zur Herstellung von Wellenkörpern der eingangs genannten Art anzugeben, wird erfindungsgemäß dadurch gelöst, daß ein metallisches Rohr mittels hohen Innendruckes in einer teilbaren Form oder Kokille zu einem abmessungsnahen hohlen Wellenkörper plastisch geformt bzw. tiefgezogen wird, wonach zumindest jeweils in einem der vorgesehenen Arbeitsoder Lagerbereiche desselben mittels eines darauf gerichteten Energiestrahles örtlich kurzzeitig ein Aufschmelzen des Wellenkörperwerkstoffes erfolgt und in die Schmelzphase als Zusatzwerkstoffe Hartstoffpartikel alleine oder zusammen mit Matrix-bzw. Bindemetall eingebracht und weitgehend homogen verteilt werden, wobei sich nach der Erstarrung eine Randschicht als Verschleißschicht ausbildet, welche Verschleißschicht spanabhebend auf das vorgesehene Endmaß des Wellenkörpers bearbeitet wird und einen Bereich mit hoher Abriebfestigkeit ergibt

Die mit dem erfindungsgemäßen Verfahren erzielten Vorteile sind im wesentlichen darin zu sehen, daß einerseits an einem einfachen Vormaterial, wie dies ein metallisches Rohr darstellt, durch im wesentlichen Tiefziehen desselben ein Wellenkörper mit hoher Genauigkeit der Abmessung geschaffen wird. Der hohle Wellenkörper besitzt ein vorteilhaft geringes Gewicht sowie hohe Steifigkeit und kann auch Ausformungen für eine Verbindung mit Antriebsmitteln aufweisen. Mittels Energiestahles(en) wird andererseits ein oberflächliches kurzzeitiges Aufschmelzen des Wellenkörperwerkstoffes bewerkstelligt, wobei ein Einbringen von Zusatzwerkstoffen in die Schmelzphase erfolgt. Durch eine hohe spezifische Strahlungsenergie können auch vorteilhaft günstige Bedingungen für eine Hochtemperaturdiffusion zwischen dem Wellenkörper und dem Zusatzwerkstoff sowie für den Zusatzwerkstoff selbst geschaffen werden. Es wird also erfindungsgemäß der Werkstoff eines mit hoher Präzision und Güte wirtschaftlich geschaffenen Wellenkörpers nur in den auf Verschleiß beanspruchten Bereichen legiert und damit oberflächlich in diesen Zonen ein anderer verschleißfester Werkstoff geschaffen, der mit dem Grundmaterial metallisch verbunden ist. Eine Schmelzenlegierung oder Diffusionslegierung erfolgt mit den vorgesehenen Zusatzwerkstoffen und kann je nach Erfordernis in geringem bis zu äußerst hohem Maße vorgesehen sein.

Die Ausbildung kann mit Vorteil so getroffen werden, daß als metallisches Rohr ein solches aus einer Eisenbasis- oder Nickelbasis- oder Titanbasis- oder Aluminiumbasis- oder Kobaltbasis-Legierung mit einer weitgehend homogenen Wand eingesetzt wird.

Legierungstechnisch, aber auch im Hinblick auf eine Rundlaufstabilität des Wellenkörpers kann es günstig sein, wenn der Energiestrahl als Hochleistungsstrahl mit einer auf den Wellenkörper örtlich mittleren Leistungsdichte von größer als 0,8 x 10³ W/cm² ausgebildet ist und die örtlichen Aufschmelzzonen, in welchen die Zusatzwerkstoffe eingeschmolzen werden, kürzer als 22 sec im schmelzflüssigen Zustand gehalten werden. Trotzdem sollte, wenn auch nur kurzzeitig, die Schmelze, in der gegebenenfalls höher schmelzende Verbindungen eingebracht sind, eine Temperatur von höher als 1695°C erreichen.

Erprobungen haben gezeigt, daß es besonders bevorzugt sein kann, wenn als Energiestrahl ein oder mehrere Hochleistungslaserstrahlen oder ein oder mehrere Plasmastrahlen gebündelt eingesetzt wird (werden),

Es hat sich für den Fachmann durchaus überraschend herausgestellt, daß beim Einsatz einer entsprechenden Technologie hochwertige, harte und extrem verschleißfeste Schichten auf Teile der Oberfläche des Wellenkörpers auflegiert werden können, wenn als Zusatzwerkstoffe Metalle, Carbide, Nitride, Carbonitride, Boride, Sulfide, Carboboride, Silizide und Oxide einzeln oder in Kombination eingesetzt werden, welche vorzugsweise Verbindungen mit Metallen der Gruppe 4,5,6,8,9,10,13,14 des Periodensystems der Elemente darstellen.

Es hat das Auflegierungsverfahren betreffend sich als günstig erwiesen, wenn die verschleißhemmende Schicht mit einem Zusatz von Hartmetallpulver gebildet wird. Der kurzen Zeitspanne wegen, in welcher hohe Temperaturen erreicht werden, kann der Metallanteil im Pulver bis 15 % erhöht sein.

Einen besonders stabilen Aufbau und eine hohe Zähigkeit der verschleißfesten Arbeits- oder Lagerschicht lassen sich dadurch erzielen, daß als Zusatz Hartstoffpartikel und Matrix- bzw. Bindemetall, gegebenenfalls mit unterschiedlichen Anteilen in Abhängigkeit von der Schichtdicke in den Oberflächenbereich des Wellenkörpers eingeschmolzen werden.

Es ist jedoch auch eine etwas geringeren Beanspruchungen standhaltende verschleißhemmende Schicht höchst wirtschaftlich herzustellen, wenn als Zusatzwerkstoff alleine Hartstoffpartikel in den gewünschten Oberflächenbereichen des Wellenkörpers eingeschmolzen werden.

Gemäß einer günstigen Weiterbildung des erfindungsgemäßen Verfahrens ist vorgesehen, daß zumindest ein Teil der in die Schmelze eingetragenen Hartstoffpartikel mit einer Oberflächenbeschichtung versehen wird. Dadurch kann, wie sich gezeigt hat, der Hartstoffanteil bei homogener Verteilung in der Matrixschmelze vergrößert und Festigkeit und Zähigkeit der Schicht weiter gesteigert werden. Besonders wirkungsvoll hat sich diese Beschichtung bei Keramikteilchen herausgestellt.

Im Hinblick auf die Art und das Ausmaß der Abriebbeanspruchungen, aber auch auf die Zähigkeit und die Durchbruchsfestigkeit der Schicht ausgerichtet wird die Ausbildung des Verfahrens vorteilhaft so getroffen, daß die verschleißfeste Schicht zumindest teilweise mit unterschiedlichen Zusatzwerkstoffen oder unterschiedlicher Konzentration der Zusatzstoffphasen, vorzugsweise in übereinandergelegten metallisch miteinander verbundenen Lagen gebildet wird. Dadurch kann eine optimale Anpassung der örtlichen Schichteigenschaften an die dort jeweils herrschende Belastung erreicht werden.

Im folgenden wird die Erfindung anhand von lediglich einen Ausführungsweg darstellenden Zeichnungen näher erläutert. Es zeigen schematisch
- Fig. 1: ein Rohr in einer Hohlform
- Fig. 2: einen Wellenkörper in Längsrichtung (Schnitt)
- Fig. 3: einen Wellenkörper in Querrichtung ( Schnitt)

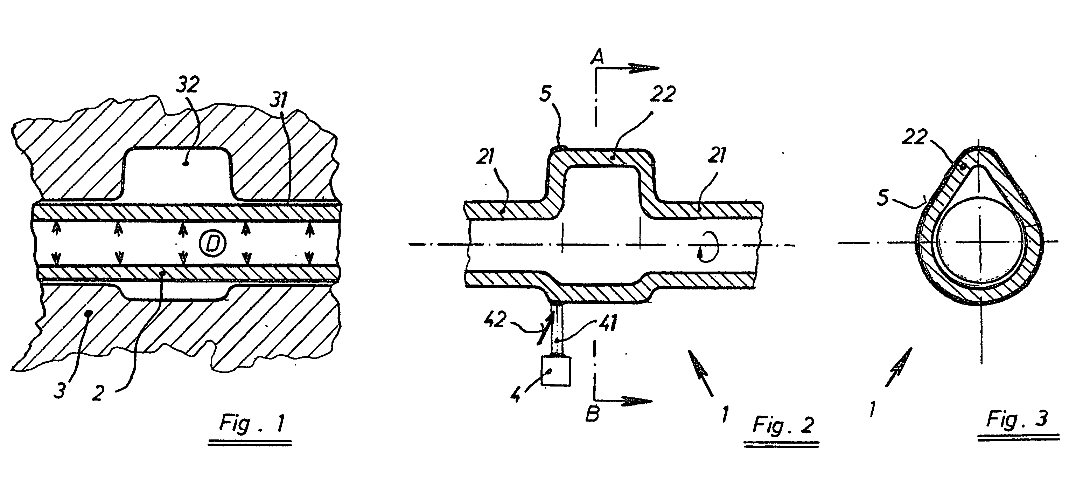

Wie in Fig. 1 dargestellt ist, wird ein metallisches Rohr 2 in einer teilbaren Kokille 3 positioniert, welche Kokille 3 geringfügig größere Bereiche 31 und asymmetrisch vergrößerte Kammern 32 besitzt. Die Innnenform der Kokille 3 ist entsprechend einer gewünschten Außenform eines Wellenkörpers 1 gebildet. Durch ein Druckfluid D erfolgt ein Tiefziehen der Rohrwand 2 und eine Abbindung der Kokilleninnenoberfläche mit den asymmetrischen Bereichen.

In Fig. 2 ist ein Rohrkörper mit symmetrischen Wandteilen 21 und asymmetrischen Wandbereichen 22 dargestellt. Wie schematisch veranschaulicht ist, erfoglt eine kleinflächige Beaufschlagung der Oberfläche der Rohrkörperteiles 22 im asymmetrisch ausgebildeten Bereich durch Energiestrahlen 41, die beispielsweise von einem Laser 4 emittiert werden. Mittels einer hohen örtlichen Energiezufuhr durch den Strahl 41 erfolgt im Bereich der Auftreff-Fläche ein Aufschmelzen des Grundwerkstoffes. Durch ein Einbringen von Zusatzwerkstoff 42 erfolgt ein Legieren der Schmelzphase, wobei sich nach deren Erstarrung eine Randschicht 5 am Wellenkörper 1 ausbildet. Ein Aufbau einer beschichteten Fläche kann derart vorgenommen werden, daß ein Wellenkörper 1 rotiert und eine Schicht 5 spiralig jeweils übergreifend aufgebracht wird. Es ist auch möglich, mehrere Schichten 5, vorzugsweise mit wenig Zusatzwerkstoff übereinander aufzuschmelzen bzw. aufzubringen.

Fig. 3 zeigt einen Wellenkörper 1 im Schnitt AB von Fig. 2. Im Bereich einer asymmetrischen Wandform 22 ist eine rundum oberflächlich angeordnete verschleißfeste Schicht 5 aufgebracht, welche Schicht letztlich spanabhebend auf ein gewünschtes Maß bearbeitet wird.

## Patentansprüche

1. Wellenkörper (1) mit zumindest in Teilbereichen über die Längserstreckung, bezogen auf die Axe, asymmetrischer Querschnittsform (22), insbesondere Nockenoder Kurbelwellen, mit in den Arbeits. und Lagerbereichen einen erhöhten Verschleißwiderstand aufweisenden Oberflächenschichten, wobei der Wellenkörper (1) als tiefgezogener metallischer Hohlkörper ausgebildet ist und zumindest in den Arbeits- und Lagerbereichen (22) jeweils eine mit dem Wellenkörper metallisch verbundene verschleißfeste Schicht (5) trägt, **dadurch gekennzeichnet, daß** die verschleißfeste Schicht (5) aus eingeschmolzenen Zusatzwerkstoffen besteht, wobei als Zusatzwerkstoff Hartstoffpartikel alleine oder zusammen mit Matrix- bzw. Bindemetall eingeschmolzen sind.

2. Wellenkörper nach Anspruch 1, **dadurch gekennzeichnet, daß** die verschleißfeste Schicht (5) eine Dicke von 0,2 bis 5,0 mm besitzt und aus eingeschmolzenen Zusatzwerkstoffen besteht, wobei zwischen dem Grundwerkstoff des Wellenkörpers (1) und der Verschleißschicht (5) eine Mischzone mit geringerer Schichtdicke ausgebildet ist und derart der Verschleißschicht- Außenbereich Homogenität aufweist.

3. Wellenkörper nach Anspruch 1 oder 2, **dadurch gekennzeichnet, daß** die Zusatzwerkstoffe Metalle, Carbide, Carbonitride, Boride, Carboboride, Nitride und Oxide, vorzugsweise Verbindungen der Metalle der Gruppen 4,5,6,8,9,10, 13 und 14 des Periodensystems der Elemente, einzeln oder in Mischform, sind.

4. Wellenkörper nach einem der Ansprüche 1 bis 3, **dadurch gekennzeichnet, daß** die verschleißfeste Schicht (5) mit Hartmetall als Zusatzwerkstoff gebildet ist.

5. Wellenkörper nach einem der Ansprüche 1 bis 4, **dadurch gekennzeichnet, daß** die verschleißfeste Schicht (5) außenseitig eine Härte von mindestens 500 HV, vorzugsweise bis 900 HV und höher, besitzt.

6. Verfahren zur Herstellung von Wellenkörpern (1) mit zumindest in Teilbereichen über die Längserstreckung, bezogen auf die, Axe asymmetrischer Qerschnittsform, insbesondere Kurbel- oder Nockenwellen, mit in den Arbeits- oder Lagerbereichen erhöhten Verschleißwiderstand des Werkstoffes aufweisenden Flächen, wobei ein metallisches Rohr (2) mittels hohen Innendruckes (D) in einer teilbaren Form oder Kokille (3) zu einem abmessungsnahen hohlen Wellenkörper plastisch geformt bzw. tiefgezogen wird, **dadurch gekennzeichnet, dass** nach einem plastischen Verformen bzw. einem Tiefziehen zumindest jeweils in einem der vorgesehenen.Arbeits- oder Lagerbereiche (22) desselben mittels eines darauf gerichteten Energiestrahles (41) örtlich kurzzeitig ein Aufschmelzen des Wellenkörperwerkstoffes erfolgt und in die Schmelzphase als Zusatzwerkstoffe Hartstoffpartikel alleine oder zusammen mit Matrix-bzw. Bindemetall eingebracht und weitgehend homogen verteilt werden, wobei sich nach der Erstarrung eine Randschicht (5) als Verschleißschicht ausbildet, welche Verschleißschicht (5) spanabhebend auf das vorgesehene Endmaß des Wellenkörpers (21) bearbeitet wird und einen Bereich mit hoher Abriebfestigkeit ergibt.

7. Verfahren nach Anspruch 6, **dadurch gekennzeichnet, daß** als metallisches Rohr (2) ein solches aus einer Eisenbasis- oder Nickelbasis- oder Titanbasis- oder Aluminiumbasis- oder Kobaltbasis- Legierung mit einer weitgehend homogenen Wand eingesetzt wird.

8. Verfahren nach Anspruch 6 oder 7, **dadurch gekennzeichnet, daß** der Energiestrahl (41) als Hochleistungsstrahl mit einer auf den Wellenkörper einwirkenden örtlich mittleren Leistungsdichte von größer als 0,8 x 10³ W/cm² ausgebildet ist und die örtlichen Aufschmelzzonen, in welchen die Zusatzwerkstoffe eingeschmolzen werden, kürzer als 22 sec im schmelzflüssigen Zustand gehalten werden.

9. Verfahren nach einem der Ansprüche 6 bis 8, **dadurch gekennzeichnet, daß** als Energiestrahl (41) ein oder mehrere Hochleistungslaserstrahl(en) oder insbesondere ein oder mehrere Plasmastrahl(en) eingesetzt wird(werden).

10. Verfahren nach einem der Ansprüche 6 bis 9, **dadurch gekennzeichnet, daß** als Zusatzwerkstoffe Metalle, Carbide, Nitride, Carbonitride, Boride, Sulfide, Carboboride, Silizide und Oxide einzeln oder in Kombination eingesetzt werden, welche vorzugsweise Verbindungen mit Metallen der Gruppe 4,5,6,8,9,10,13,14 des Periodensystems der Elemente darstellen.

11. Verfahren nach einem der Ansprüche 6 bis 10, **dadurch gekennzeichnet, daß** die verschleißhemmende Schicht mit Zusatz von Hartmetallpulver gebildet wird.

12. Verfahren nach einem der Ansprüche 6 bis 11, **dadurch gekennzeichnet, daß** als Zusatzwerkstoff Hartstoffpartikel und Matrix- bzw. Bindemetall mit unterschiedlichen Anteilen in Abhängigkeit von der Schichtdicke in den Oberflächenbereich des Wellenkörpers (22) eingeschmolzen werden.

13. Verfahren nach einem der Ansprüche 6 bis 12, **dadurch gekennzeichnet, daß** zumindest ein Teil der in die Schmelze eingetragenen Hartstoffpartikel mit einer Oberflächenbeschichtung versehen sind.

14. Verfahren nach einem der Ansprüche 6 bis 13, **dadurch gekennzeichnet, daß** die verschleißfeste Schicht zumindest teilweise mit unterschiedlichen Zusatzwerkstoffen oder unterschiedlicher Konzentration, vorzugsweise in übereinandergelegten metallisch verbundenen Lagen, gebildet wird.

## Claims

1. A shaft body (1) having an asymmetrical cross-sectional shape (22) at least in partial regions over the longitudinal extent, relative to the axis, in particular cam- or crankshafts, comprising surface layers having increased wear resistance in the working and bearing regions, the shaft body (1) being a deep-drawn metallic hollow body and at least in the working and bearing regions (22) carrying in each case a wear-resistant layer (5) metallically bonded to the shaft body, **characterised in that** the wear-resistant layer (5) consists of melted-in added materials, hard material particles being melted in as the added material on their own or together with matrix- or binding metal.

2. A shaft body according to Claim 1, **characterised in that** the wear-resistant layer (5) has a thickness of 0.2 to 5.0 mm and consists of melted-in added materials, a mixed zone having a smaller layer thickness being formed between the base material of the shaft body (1) and the wear layer (5), and the wear layer outer region thereby having homogeneity.

3. A shaft body according to Claim 1 or 2, **characterised in that** the added materials are metals, carbides, carbonitrides, borides, carboborides, nitrides and oxides, preferably compounds of the metals of Groups 4, 5, 6, 8, 9, 10, 13 and 14 of the Periodic Table of Elements, singly or in mixed form.

4. A shaft body according to one of Claims 1 to 3, **characterised in that** the wear-resistant layer (5) is formed with hard metal as the added material.

5. A shaft body according to one of Claims 1 to 4, **characterised in that** the wear-resistant layer (5) externally has a hardness of at least 500 HV, preferably up to 900 HV and above.

6. A method for manufacturing shaft bodies (1) having an asymmetrical cross-sectional shape at least in partial regions over the longitudinal extent, relative to the axis, in particular crank- or camshafts, comprising surfaces having increased wear resistance of the material in the working or bearing regions, a metallic tube (2) being moulded or deep-drawn by means of high internal pressure (D) in a separable mould or permanent mould (3) to form a dimensionally-close hollow shaft body, **characterised in that**, after forming or deep-drawing, melting of the shaft body material briefly takes place locally at least in each one of the provided working or bearing regions (22) thereof by means of an energy beam (41) directed at the said regions, and hard material particles on their own or together with matrix- or binding metal as the added materials are brought into the melting phase and are distributed largely homogeneously, a surface layer (5) forming as a wear layer after hardening, which wear layer (5) is machined by cutting to the provided final size of the shaft body (21) and results in a region having high wear resistance.

7. A method according to Claim 6, **characterised in that**, as the metal tube (2), one made of an iron-based or nickel-based or titanium-based or aluminium-based or cobalt-based alloy with a largely homogeneous wall is used.

8. A method according to Claim 6 or 7, **characterised in that** the energy beam (41) is a high-power beam with a local mean power density acting on the shaft body of more than 0.8 x 10³ W/cm², and the local melted zones in which the added materials are melted-in are kept in the molten state for less than 22 sec.

9. A method according to one of Claims 6 to 8, **characterised in that** one or more high power laser beam(s) or in particular one or more plasma beam(s) is (are) used as the energy beam (41).

10. A method according to one of Claims 6 to 9, **characterised in that** metals, carbides, nitrides, carbonitrides, borides, sulphides, carboborides, silicides and oxides, singly or in combination, are used as added materials, preferably being compounds with metals of Group 4, 5, 6, 8, 9, 10, 13, 14 of the Periodic Table of Elements.

11. A method according to one of Claims 6 to 10, **characterised in that** the wear-inhibiting layer is formed with the addition of hard metal powder.

12. A method according to one of Claims 6 to 11, **characterised in that** hard material particles and matrix- or binding metal having differing proportions in dependence on the layer thickness are melted into the surface region of the shaft body (22).

13. A method according to one of Claims 6 to 12, **characterised in that** at least some of the hard material particles introduced into the melt are provided with a surface coating.

14. A method according to one of Claims 6 to 13, **characterised in that** the wear-resistant layer is formed at least in part with different added materials or differing concentration, preferably in metallically bonded layers laid one on top of another.

## Revendications

1. Corps d'arbre (1) ayant une forme en coupe transversale (22) asymétrique par rapport à l'axe au moins dans des zones partielles sur l'extension longitudinale, en particulier pour arbres à cames ou arbres à manivelle, comportant, dans les zones de travail et de palier, des couches de surface présentant une résistance à l'usure plus élevée, le corps d'arbre (1) se présentant sous la forme d'un corps métallique creux obtenu par emboutissage profond et portant, et comportant au moins dans les zones de travail et de palier (22), respectivement une couche (5) résistant à l'usure liée au corps d'arbre par une liaison métallique, **caractérisé en ce que** la couche (5) résistant à l'usure est constituée de matériaux d'appoint intégrés par fusion, comme matériau d'appoint, des particules d'un matériau dur étant intégré par fusion individuellement ou conjointement avec un métal matrice ou un métal liant.

2. Corps d'arbre selon la revendication 1, **caractérisé en ce que** la couche (5) résistant à l'usure a une épaisseur de 0,2 à 5,0 mm et est constituée de matériaux d'appoint intégrés par fusion, une zone de mélange de plus faible épaisseur de couche étant formée entre le matériau de base du corps d'arbre (1) et la couche d'usure (5), la zone externe présentant de la sorte une homogénéité.

3. Corps d'arbre selon la revendication 1 ou 2, **caractérisé en ce que** les matériaux d'appoint sont des métaux, des carbures, des carbonitrures, des borures, des carboborures, des nitrures et des oxydes, de préférence des composés de métaux des groupes 4, 5, 6, 8, 9, 10, 13 et 14 du tableau périodique des éléments, individuellement ou sous forme de mélange.

4. Corps d'arbre selon l'une quelconque des revendications 1 à 3, **caractérisé en ce que** la couche (5) résistant à l'usure est formée d'un métal dur comme matériau d'appoint.

5. Corps d'arbre selon l'une quelconque des revendications 1 à 4, **caractérisé en ce que** la couche (5) résistant à l'usure présente extérieurement une dureté d'au moins 500 HV, de préférence jusqu'à 900 HV et plus.

6. Procédé de fabrication de corps d'arbres (1) comportant une forme en coupe transversale asymétrique par rapport à l'axe au moins dans des zones partielles sur l'extension longitudinale, en particulier pour arbres à cames ou arbres à manivelle, avec des surfaces présentant une résistance à l'usure plus élevée du matériau dans les zones de travail ou de palier, procédé dans lequel un tube métallique (2) est soumis à une déformation plastique ou à un emboutissage profond au moyen d'une pression interne élevée (D) dans un moule ou une coquille divisible (3) pour obtenir un corps d'arbre creux proche des dimensions finales, **caractérisé en ce qu'**on effectue, après une déformation plastique ou un emboutissage profond, au moins respectivement dans l'une des zones de travail ou de palier (22) prévues du corps d'arbre, au moyen d'un faisceau énergétique (41) dirigé sur celles-ci, une fusion du matériau du corps d'arbre localement pendant une courte période et on intègre à la phase de fusion comme matériaux d'appoint des particules de matériau dur individuellement ou conjointement avec un métal matrice ou un métal liant en les répartissant de manière largement homogène, ce qui a pour effet de former, après solidification, une couche marginale (5) comme couche d'usure, ladite couche d'usure (5) étant usinée par enlèvement de copeaux jusqu'à la dimension finale prévue du corps d'arbre (21) et offrant une zone de résistance élevée à l'abrasion.

7. Procédé selon la revendication 6, **caractérisé en ce que** l'on utilise comme tube métallique (2) un tube formé d'un alliage à base de fer ou à base de nickel ou à base de titane ou à base d'aluminium ou à base de cobalt et ayant une paroi largement homogène.

8. Procédé selon la revendication 6 ou 7, **caractérisé en ce que** le faisceau énergétique se présente sous la forme d'un faisceau de grande puissance témoignant d'une puissance volumique moyenne localisée agissant sur le corps d'arbre de plus de 0,8 x 10³ W/cm² et les zones de fusion localisées, auxquelles les matériaux d'appoint sont intégrés par fusion, sont maintenues à l'état de fusion liquide moins de 22 secondes.

9. Procédé selon l'une quelconque des revendications 6 à 8, **caractérisé en ce que** l'on utilise comme faisceau énergétique (41) un ou plusieurs faisceaux laser de grande puissance ou, en particulier, un ou plusieurs faisceaux au plasma.

10. Procédé selon l'une quelconque des revendications 6 à 9, **caractérisé en ce qu'**on utilise comme matériaux d'appoint des métaux, des carbures, des nitrures, des carbonitrures, des borures, des sulfures, des carboborures, des siliciures et des oxydes, individuellement ou en combinaison, qui représentent de préférence des composés avec des métaux des groupes 4, 5, 6, 8, 9, 10, 13 et 14 du tableau périodique des éléments.

11. Procédé selon l'une quelconque des revendications 6 à 10, **caractérisé en ce que** la couche freinant l'usure est formée avec l'appoint d'une poudre de métal dur.

12. Procédé selon l'une quelconque des revendications 6 à 11, **caractérisé en ce que** l'on intègre par fusion à la zone de surface du corps d'arbre (22) comme matériau d'appoint des particules de matériau dur et un métal matrice ou un métal liant en différentes fractions en fonction de l'épaisseur de la couche.

13. Procédé selon l'une quelconque des revendications 6 à 12, **caractérisé en ce qu'**au moins une partie des particules de matériau dur intégrées à la masse en fusion est pourvue d'un revêtement de surface.

14. Procédé selon l'une quelconque des revendications 6 à 13, **caractérisé en ce que** la couche résistant à l'usure est formée, au moins en partie, de différents matériaux d'appoint ou de différentes concentrations, de préférence en couches superposées liées par liaison métallique.
